# EUROPEAN PATENT SPECIFICATION

(11) **EP 1 378 412 B1**
(45) Date of publication and mention of the grant of the patent: **02.03.2005**
(21) Application number: 03076919.4
(22) Date of filing: 19.06.2003
(51) Int. Cl.: B60T 10/02, F16D 57/02

(54) **Hydrodynamic brake**
Hydrodynamische Bremse
Frein hydrodynamique

(30) Priority: 03.07.2002 SE 0202086
(43) Date of publication of application: 07.01.2004
(73) Proprietor: Scania CV AB, 151 87 Södertälje (SE)
(72) Inventor: Jönsson, Hans, 151 47 Södertälje (SE); Färm, Johnny, 129 51 Hägersten (SE)

(56) References cited:
- EP-A- 0 428 311
- EP-A- 0 713 811

## Description

### BACKGROUND TO THE INVENTION, AND STATE OF THE ART

The invention relates to a hydrodynamic brake according to the preamble of claim 1.

Conventional hydrodynamic brakes, such as retarders in vehicles, incorporate in many cases the use of a regulating piston which can be set in a number of positions to control the oil flow in the retarder. Variable movement of the regulating piston to various different positions by means of a proportional valve enables the retarder to be activated and controlled so as to achieve a desired braking action. Such a regulating piston controls a number of oil flows in a number of pipe circuits simultaneously. The controls exerted according to the position of the regulating piston include controlling the flow path for the oil which is continuously pumped from an oil sump during operation of the vehicle. When a braking action is desired, the regulating piston is placed in a position such that the oil flow is led to the toroidal space of the retarder, and when no braking action is required the regulating piston is placed in a position such that the oil flow is led past the toroidal space to a pipe circuit which allows transfer of the oil to an oil sump.

Such a regulating piston functions reliably but necessarily has a relatively complex shape in order to be able to provide control of a number of oil flows in a number of pipe circuits simultaneously. It is also of relatively considerable size. The respective pipe circuits whose oil flows are to be controlled by the regulating piston have therefore to be so positioned that they all run past the regulating piston. Such a requirement complicates and lengthens the procedure of installing the pipe circuits. A hydrodynamic brake which incorporates a regulating piston is therefore relatively expensive to manufacture.

### SUMMARY OF THE INVENTION

The object of the present invention is to provide control of the substantially continuous flow of medium from a storage space of a hydrodynamic brake in a desired direction according to the prevailing operating state of the hydrodynamic brake, by means of a relatively simple arrangement which can be manufactured at low cost while at the same time providing reliable control of the oil flow.

This object is achieved with the hydrodynamic brake of the kind mentioned in the introduction which is characterised by the features indicated in the characterising part of claim 1. High pressure in the first pipe circuit indicates that the hydrodynamic brake is activated, and low pressure therein that the brake is not activated. Depending on the pressure in the first pipe circuit, the valve arrangement here automatically guides the oil flow in a desired direction. In this case there is thus no need to use any regulating piston which, simultaneously inter alia with control of the flow of medium in the first pipe circuit, would also control the flow of medium in the second pipe circuit. A separate valve arrangement can here be used for leading the medium in the second pipe circuit in a desired direction according to the operating state of the hydrodynamic brake. Such a separate valve arrangement may be of simple design. Other advantages are that the valve arrangement may be situated at substantially any desired location and that the installing of the first and second pipe circuits is considerably simplified as compared with the installing of pipes in connection with the use of a conventional regulating piston. A hydrodynamic brake with such a valve arrangement can thus be manufactured at lower cost than a conventional hydrodynamic brake.

According to a preferred embodiment of the present invention, the pressure in the first pipe circuit is regulated by a regulating valve. Such a regulating valve may be controlled by the pressure from a proportional valve. The regulating valve is with advantage situated in parallel with an inlet check valve in the first pipe circuit. This means that the flow of medium in the first pipe circuit can be led either back to the toroidal space after cooling or to the storage space for the medium. If activation of the brake is desired, the proportional valve initiates the supply of a control pressure to the regulating valve so that the latter is kept closed and a high pressure of medium is maintained in the first pipe circuit. The high pressure of medium opens the inlet check valve and the medium is led to the toroidal space. If instead no activation of the brake is desired, the proportional valve initiates the supply of a low control pressure to the regulating valve so that the regulating valve opens and the medium is led via the regulating valve to the storage space. This means that the pressure in the first pipe circuit decreases to substantially atmospheric pressure.

According to another preferred embodiment of the present invention, the valve arrangement incorporates a first check valve arranged in a portion of the second pipe circuit which is connected to the first pipe circuit, which check valve is designed to be urged, by the pressure in the first pipe circuit, towards a closed position. If a low pressure prevails in the first pipe circuit, as is the case when the brake is not activated, it is possible to lead the medium to the first pipe portion via the first check valve. When the brake is activated, however, such a high positive pressure prevails in the first pipe portion that opening of the first check valve is prevented. In this situation all of the medium is led to the toroidal space. A check valve is a component which functions reliably and can be procured at low cost. With advantage, the first check valve has preloading urging it towards a closed position so that it opens and allows a flow of medium from the second pipe circuit to the first pipe circuit when there prevails in the first pipe circuit a pressure which indicates that the brake is not activated. Such defined preloading can be provided by means of a suitable spring. The first check valve preferably has preloading such that it is opened by a positive pressure of less than 1 bar in the second pipe circuit. This means that only a relatively small positive pressure in the second pipe circuit is required to open the first check valve when the brake is not activated.

According to another preferred embodiment of the present invention, the valve arrangement incorporates a second check valve arranged in a portion of the second pipe circuit which leads to the toroidal space, and this second check valve has a higher preloading urging it towards a closed position than the first check valve. This means that all of the medium led into the second pipe circuit will be led via the first check valve which has the lowest preloading when the brake is not activated. The preloading of the second check valve is smaller than the positive pressure which occurs in the first pipe circuit during activation of the brake. This means that all of the medium led into the second pipe circuit will be led to the toroidal space via the second check valve when the brake is activated. The brake arrangement thus comprises two check valves which can be provided at relatively low cost. With advantage, the preloading of the second check valve is such that it opens when there is an positive pressure of 1 to 3 bar in the second pipe circuit. The inlet of the medium into the toroidal space is selected advantageously in a central portion of the toroidal space where the pressure is relatively low and at least lower than the opening pressure of the second check valve. During operation of the brake, the positive pressure in the first pipe circuit is normally over 5 bar, i.e. well above the opening pressure for the second valve.

According to another preferred embodiment of the present invention, the second pipe circuit incorporates a pump which effects transfer of the medium at a positive pressure from the storage space. The pump has to be able to provide at least a positive pressure such that the second check valve can be opened. Said pump is preferably a gear pump. Such pumps are functional and can be of relatively simple design. A pump impeller in the form of a gearwheel for this purpose may be driven by the same shaft as drives the rotor of the hydrodynamic brake.

### BRIEF DESCRIPTION OF THE DRAWING

A preferred embodiment of the invention is described below by way of example with reference to the attached drawing, in which:

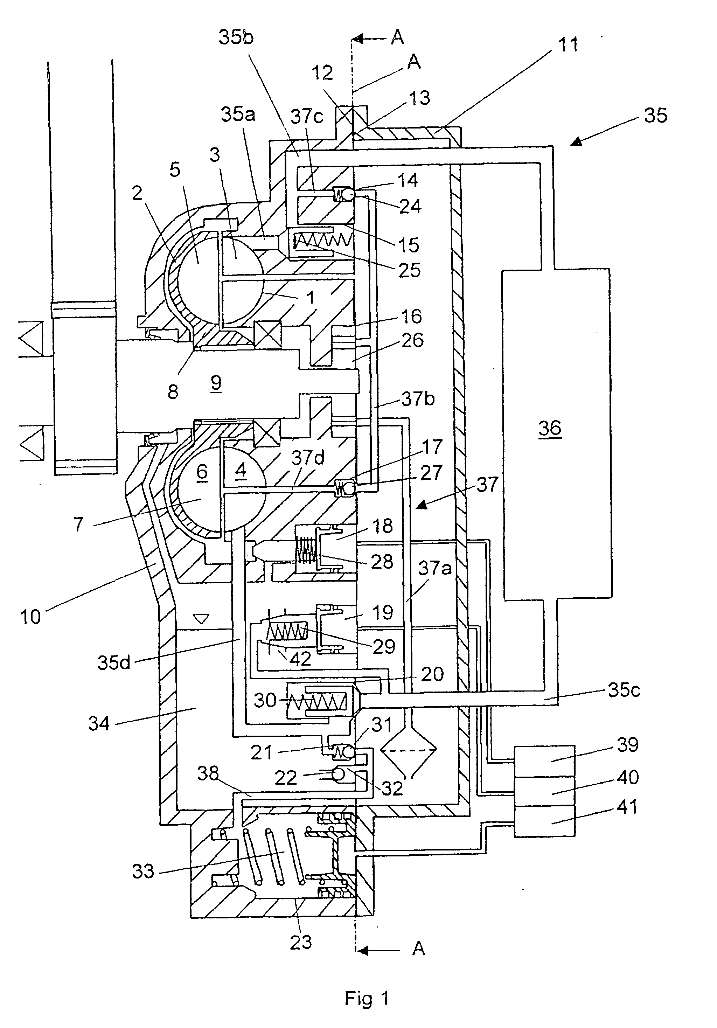

Fig. 1 depicts a section of a retarder according to the present invention.

### DETAILED DESCRIPTION OF A PREFERRED EMBODIMENT OF THE INVENTION

Fig. 1 depicts a hydrodynamic brake in the form of a retarder of a powered vehicle. The retarder comprises a stator 1 and a rotor 2. The stator 1 has an annular shell 3 with a multiplicity of blades 4 arranged at uniform spacing along the annular shell 3. The rotor 2 is of corresponding design with an annular shell 5 which incorporates a multiplicity of blades 6 likewise arranged at uniform spacing along the annular shell 5. The respective shells 3, 5 of the stator 1 and rotor 2 are coaxially arranged with respect to one another so that they together form a toroidal space 7. The rotor 2 incorporates a shaft portion 8 which is firmly connected to a rotatable shaft 9. The rotatable shaft 9 is itself connected to an appropriate driveshaft of the vehicle's driveline. The rotor 2 will thus rotate together with the vehicle's driveline

The retarder depicted in Fig. 1 incorporates a housing which comprises a first element 10 and a second element 11. The first element 10 incorporates a body in which inter alia the stator 1 and the rotor 2 are arranged. The second element 11 is of cover-like design and can be fitted detachably along a connecting region 12 to the first element 10 so that in a fitted state they form a closed housing. In the connecting region 12, a gasket 13 is arranged so that the housing forms a sealed enclosure. The first element 10 incorporates a multiplicity of recesses 14-23 which each have an opening in a substantially common plane A represented by the broken line A-A in Fig. 1. The connecting region 12 of the first element 10 and second element 11 also has an extent in said plane A.

The recesses 14-23 are each designed to accommodate a component which forms part of the retarder. The shape and size of the recesses 14-23 are adapted to the respective specific components which they accommodate. A first such recess 14 accommodates a first check valve 24. A second recess 15 accommodates an outlet check valve 25. A third recess 16 accommodates a gear pump 26. A fourth recess 17 accommodates a second check valve 27. A fifth recess 18 accommodates a dump (rapid emptying) valve 28. A sixth recess 19 accommodates a regulating valve 29. A seventh recess 20 accommodates an inlet check valve 30. An eighth recess 21 accommodates a filling valve 31. A ninth recess 22 accommodates an intake valve 32 for filling an accumulator 33. A tenth recess 23 accommodates said accumulator 33. The first element 10 and the second element 11 thus form a sealed housing which incorporates an oil sump 34 for storage of oil.

The retarder incorporates a first pipe circuit 35 with a first portion 35a which leads the oil from an outlet from the toroidal space 7 to the outlet check valve 25. A second portion 35b of the first pipe circuit leads the oil from the outlet check valve 25 to a heat exchanger 36 to cool the oil. A third portion 35c of the first pipe circuit leads the cooled oil to the inlet check valve 30 or alternatively to the regulating valve 29, depending on whether the retarder is or is not activated. A fourth portion 35d of the first pipe circuit leads the oil to an inlet to the toroidal space 7. The retarder incorporates a second pipe circuit 37 with a first portion 37a via which the oil is drawn from the oil sump 34 to the gear pump 26. A second portion 37b of the second pipe circuit 37 leads the oil to the first check valve 24 and the second check valve 27. When the retarder is not activated, the oil is led via the first check valve 24 and a third portion 37c of the second pipe circuit to the second portion 35b of the first pipe circuit. If the retarder is activated, the oil is led instead via the second check valve 27 and a fourth portion 37d of the second pipe circuit to an inlet to the toroidal space 7. The retarder also incorporates a third pipe circuit 38 which connects the accumulator 33 to a fourth portion 35d of the first pipe circuit. The third circuit 38 incorporates the filling valve 31 and the accumulator's intake valve 32. The first element 10 of the housing incorporates, adjacent to the recesses 14-23, occupied ducts which form part of the aforesaid pipe circuits 35, 37, 38.

A first control valve 39 is intended to control, by means of a control pressure, the operation of the safety valve 18 so that the toroidal space 7 can be quickly emptied of oil when necessary. A proportional valve 40 is intended to control, by means of a control pressure, the operation of the regulating valve 19 in order to activate the retarder and regulate the retarder's braking action. A second control valve 41 is intended to control, by means of a control pressure, the operation of the accumulator 33 so as to fill the toroidal space quickly with oil in order to effect a rapid braking action of the retarder. All of these three control valves 39, 40, 41 and the heat exchanger 36 are situated outside the housing.

When the vehicle's driver does not require the vehicle to be subjected to any braking action, the proportional valve 40 supplies no control pressure to the regulating valve 29, which opens fully so that any oil in the third portion 37c of the first pipe circuit drains away, via a passage 42, to the oil sump 34. This means that no oil runs past the inlet check valve 30, which requires relatively high oil pressure for it to open and lead oil to the toroidal space 7. As in this situation no oil is led to the toroidal space 7, substantially no braking action is effected other than a minor undesired braking action due to a so-called no-load loss caused by the rotor circulating the air present in the toroidal space 7.

The driveshaft 9 also drives the gear pump 26 which continuously pumps oil from the oil sump 34 during operation of the vehicle. From the gear pump 26, the oil is led at a positive pressure to the second portion 37b of the second pipe circuit. The first check valve 24 here has a spring with preloading such that it opens at a positive pressure of about 0.5 bar. The second check valve 27 has a spring with preloading such that it opens at a positive pressure of about 2 bar. When the regulating valve 29 is open, there is substantially no positive pressure in the first pipe circuit 35. This means that in the second portion 35b of the first pipe circuit there is no positive pressure which would otherwise increase the opening pressure for the first check valve 24. As the first check valve 24 opens at a lower pressure than the second check valve 27, the oil transferred from the oil sump 34 by the gear pump 26 is only led via the first check valve 24 and the third portion 37c of the second pipe circuit to the second portion 35b of the first pipe circuit, which is thus situated after the toroidal space 7 in the direction of flow of the oil. Thereafter the oil is led back to the oil sump 34 via the heat exchanger 36, the third portion 35c of the first pipe circuit, and the regulating valve 29.

When the vehicle's driver requires the vehicle to be subjected to a braking action, the proportional valve 40 supplies the regulating valve 29 with a control pressure which is greater than the preloading of the inlet check valve 30. The second control valve 41 activates the accumulator 33 so that the latter, via the third pipe circuit 38 and the filling valve 31, leads oil at high pressure to the fourth portion 35d of the first pipe circuit and to the toroidal space 7. The accumulator 33 initiates oil supply by means of a positive pressure to bring about rapid filling of the toroidal space 7 and thereby effect a corresponding rapid braking action of the retarder. After the circulation of the oil in the toroidal space 7, the oil is led out at high pressure via an outlet from the stator 1 to the first portion 35a of the first pipe circuit. The outlet check valve 25 is opened by the high oil pressure and the oil is led to the second portion 35b of the first pipe circuit. At this stage the oil is at a positive pressure of at least 5 bar. The oil in the second portion 35b of the first pipe circuit is also led into the third portion 37c of the second pipe circuit and exerts there a pressure action urging the first check valve 24 towards a closed position. The opening pressure required for the first check valve 24 will thus be higher than the corresponding opening pressure for the second check valve 27 which had a preloading of about 2 bar. This means that all of the oil transferred by the gear pump 26 from the oil sump 34 will be led via the second check valve 27 and the fourth portion 37d of the second pump circuit to an inlet to the toroidal space 7.

The inlet to the toroidal space 7 is with advantage arranged centrally in the toroidal space 7. In the central part of the toroidal space a relatively low pressure prevails in substantially all operating states. Using a separate pipe portion 37d to supply the oil from the oil sump 34 at atmospheric pressure to the toroidal space 7 means that this oil need not be pumped up to the high pressure which prevails in the fourth portion 35d of the first pipe circuit. A less expensive gear pump 26 with a smaller pump capacity can therefore be used. The fourth portion 37d of the second pipe circuit may also be of relatively simple design since it need only be dimensioned to carry oil at a relatively small positive pressure.

The oil is led from the second portion 35b of the first pipe circuit to the heat exchanger 36, in which it is cooled. The braking action of the retarder is regulated by the control pressure from the proportional valve 40. The position of the regulating valve 29 is adjusted by means of the control pressure from the proportional valve 40 so that a certain proportion of the cooled oil after the heat exchanger 36 is led back to the oil sump 34, while the remainder is led past the inlet check valve 30 to the toroidal space 7. The result is regulation of the amount of oil circulating in the toroidal space 7 so as to effect a desired braking action.

The invention is in no way limited to the embodiment described but may be varied freely within the scopes of the claims.

## Claims

1. A hydrodynamic brake comprising a stator (1), a rotor (2), a toroidal space (7) defined by the stator (1) and rotor (2), a medium intended to be supplied to the toroidal space (7) for activation of the brake, a first pipe circuit (35) which allows transfer of the medium from an outlet from the toroidal space (7), and a second pipe circuit (37) which allows transfer of the medium from a storage space (34) to the toroidal space (7) when the brake is activated and past the toroidal space (7) to the first pipe circuit (35) when the brake is not activated, **characterised in that** the second pipe circuit (37) incorporates a valve arrangement (24, 27) intended to be controlled by the pressure in the first pipe circuit (35) so that the medium in the second pipe circuit (37) is led to the toroidal space (7) when there prevails in the first pipe circuit (35) a pressure which indicates that the brake is activated, and to the first pipe circuit (35) when there prevails in the first pipe circuit (35) a pressure which indicates that the brake is not activated.

2. A hydrodynamic brake according to claim 1, **characterised in that** the pressure in the first pipe circuit (35) is intended to be regulated by means of a regulating valve (29).

3. A hydrodynamic brake according to either of the foregoing claims, **characterised in that** the valve arrangement incorporates a first check valve (24) arranged in a portion of the second pipe circuit (37c) which is connected to the first pipe circuit (35), which check valve (24) is designed to be urged towards a closed position by the pressure in the first pipe circuit (35).

4. A hydrodynamic brake according to claim 3, **characterised in that** the first check valve (24) has preloading urging it towards a closed position so that it opens and allows flow of medium from the second pipe circuit (37) to the first pipe circuit (35) when there prevails in the first pipe circuit (35) a pressure which indicates that the brake is not activated.

5. A hydrodynamic brake according to claim 4, **characterised in that** the first check valve (24) has preloading such that it opens when there is a positive pressure of less than 1 bar in the second pipe circuit (37).

6. A hydrodynamic brake according to any one of claims 3-5, **characterised in that** the valve arrangement incorporates a second check valve (27) arranged in a portion of the second pipe circuit (37d) which leads to the toroidal space which second check valve (27) has a higher preloading urging it towards a closed position than the first check valve (24).

7. A hydrodynamic brake according to claim 6, **characterised in that** the second check valve (27) has preloading which is smaller than the pressure which prevails in the first pipe circuit (35) and indicates that the brake is activated.

8. A hydrodynamic brake according to claim 7, **characterised in that** the second check valve (27) has preloading such that it opens when there is a positive pressure of 1 to 3 bar in the second pipe circuit (37).

9. A hydrodynamic brake according to any one of the foregoing claims, **characterised in that** the second pipe circuit (37) incorporates a pump (26) which effects transfer of the medium at a positive pressure from the storage space (34).

10. A hydrodynamic brake according to claim 9, **characterised in that** said pump is a gear pump (26).

## Patentansprüche

1. Hydrodynamische Bremse umfassend einen Stator (1), einen Rotor (2), einen toroidförmigen Raum (7), der von dem Stator (1) und dem Rotor (2) begrenzt ist, ein Medium, das dazu vorgesehen ist, dem toroidförmigen Raum (7) zur Aktivierung der Bremse zugeführt zu werden, einen ersten Leitungskreis (35) der eine Übertragung des Mediums von einem Auslaß aus dem toroidförmigen Raum (7) ermöglicht, einen zweiten Leitungskreis (37), der eine Übertragung des Mediums aus einem Speicherraum (34) zu dem toroidförmigen Raum (7) zulässt, wenn die Bremse aktiviert ist, und aus dem toroidförmigen Raum (7) zu dem ersten Leitungskreis (35), wenn die Bremse nicht aktiviert ist, **dadurch gekennzeichnet, dass** der zweite Leitungskreis (37) eine Ventilanordnung (24, 27) umfasst, die derart ausgelegt ist, dass sie durch den Druck in dem ersten Leitungskreis (35) gesteuert wird, so dass das Medium in dem zweiten Leitungskreis (37) zu dem toroidförmigen Raum (7) geführt wird, wenn in dem ersten Leitungskreis (35) ein Druck herrscht, der anzeigt, dass die Bremse aktiviert ist, und zu dem ersten Leitungskreis (35) geführt wird, wenn in dem ersten Leitungskreis (35) ein Druck herrscht, der anzeigt, dass die Bremse nicht aktiviert ist.

2. Hydrodynamische Bremse nach Anspruch 1, **dadurch gekennzeichnet, dass** der Druck in dem ersten Leitungskreis (35) mittels eines Regelventils (29) regelbar ist.

3. Hydrodynamische Bremse nach einem der vorangehenden Ansprüche, **dadurch gekennzeichnet, dass** die Ventilanordnung ein erstes Rückschlagventil (24) umfasst, das in einem Teil des zweiten Leitungskreises (37c) angeordnet ist, der mit dem ersten Leitungskreis (35) verbunden ist, wobei das Rückschlagventil (24) derart gestaltet ist, dass es in eine geschlossene Position durch den Druck in dem ersten Leitungskreis (35) gedrückt wird.

4. Hydrodynamische Bremse nach Anspruch 3, **dadurch gekennzeichnet, dass** das erste Rückschlagventil (24) unter Vorlast steht, die dieses in eine geschlossene Position drückt, so dass es sich öffnet und einen Strom von Medium aus dem zweiten Leitungskreis (37) zu dem ersten Leitungskreis (35) zulässt, wenn in dem ersten Leitungskreis (35) ein Druck herrscht, der anzeigt, dass die Bremse nicht aktiviert ist.

5. Hydrodynamische Bremse nach Anspruch 4, **dadurch gekennzeichnet, dass** das erste Rückschlagventil (24) unter Vorspannung steht, so dass es sich öffnet, wenn in dem zweiten Leitungskreis (37) ein Überdruck von weniger als 1 bar herrscht.

6. Hydrodynamische Bremse nach einem der Ansprüche 3 bis 5, **dadurch gekennzeichnet, dass** die Ventilanordnung ein zweites Rückschlagventil (27) umfasst, das in einem Teil des zweiten Leitungskreises (37d) angeordnet ist, der zu dem toroidförmigen Raum (7) führt, wobei das zweite Rückschlagventil (27) eine höhere Vorlast aufweist, die es in eine geschlossene Position drückt, als das erste Rückschlagventil (24).

7. Hydrodynamische Bremse nach Anspruch 6, **dadurch gekennzeichnet, dass** das zweite Rückschlagventil (27) unter Vorlast steht, welche kleiner als der Druck ist, der in dem ersten Leitungskreis (35) herrscht und angibt, dass die Bremse aktiviert ist.

8. Hydrodynamische Bremse nach Anspruch 7, **dadurch gekennzeichnet, dass** das zweite Rückschlagventil (27) eine derartige Vorlast aufweist, das es sich öffnet, wenn in dem zweiten Leitungskreis (37) ein Überdruck von 1 bis 3 bar herrscht.

9. Hydrodynamische Bremse nach einem der vorangehenden Ansprüche, **dadurch gekennzeichnet, dass** der zweite Leitungskreis (37) eine Pumpe (26) umfasst, die eine Übertragung des Mediums bei Überdruck von dem Speicherraum (34) bewirkt.

10. Hydrodynamische Bremse nach Anspruch 9, **dadurch gekennzeichnet, dass** die Pumpe eine Zahnradpumpe ist.

## Revendications

1. Frein hydrodynamique comportant un stator (1), un rotor (2), un espace toroïdal (7) étant défini par le stator (1) et le rotor (2), un milieu prévu pour être alimenté vers l'espace toroïdal (7) pour l'activation du frein, un premier circuit de tuyauterie (35) qui permet le transfert du milieu depuis une sortie de l'espace toroïdal (7), et un second circuit de tuyauterie (37) qui permet le transfert du milieu depuis un espace de stockage (34) vers l'espace toroïdal (7) lorsque le frein est activé et au-delà de l'espace toroïdal (7) vers le premier circuit de tuyauterie (35) lorsque le frein n'est pas activé, **caractérisé en ce que** le second circuit de tuyauterie (37) comporte un agencement de vanne (24, 27) prévu pour être commandé par la pression existant dans le premier circuit de tuyauterie (35) de sorte que le milieu situé dans le second circuit de tuyauterie (37) est acheminé vers l'espace toroïdal (7) lorsque dans le premier circuit de tuyauterie (35) règne une pression qui indique que le frein est activé, et vers le premier circuit de tuyauterie (35) lorsque dans le premier circuit de tuyauterie (35) règne une pression qui indique que le frein n'est pas activé.

2. Frein hydrodynamique selon la revendication 1, **caractérisé en ce qu'**il est prévu de réguler la pression dans le premier circuit de tuyauterie (35) par l'intermédiaire d'une vanne de régulation (29).

3. Frein hydrodynamique selon la revendication 1 ou 2, **caractérisé en ce que** l'agencement de vanne comporte un premier clapet anti-retour (24) agencé dans une partie du second circuit de tuyauterie (37c) qui est raccordée au premier circuit de tuyauterie (35), lequel premier clapet anti-retour (24) est conçu pour être repoussé dans une position fermée par la pression existant dans le premier circuit de tuyauterie (35).

4. Frein hydrodynamique selon la revendication 3, **caractérisé en ce que** le premier clapet anti-retour (24) a une précharge le repoussant en direction d'une position fermée de sorte qu'il s'ouvre et permet l'écoulement de milieu depuis le second circuit de tuyauterie (37) vers le premier circuit de tuyauterie (35) lorsque dans le premier circuit de tuyauterie (35) règne une pression qui indique que le frein n'est pas activé.

5. Frein hydrodynamique selon la revendication 4, **caractérisé en ce que** le premier clapet anti-retour (24) a une précharge telle qu'il s'ouvre lorsqu'il existe une pression positive inférieure à 10⁵ Pa (1 bar) dans le second circuit de tuyauterie (37).

6. Frein hydrodynamique selon l'une quelconque des revendications 3 à 5, **caractérisé en ce que** l'agencement de vanne comporte un second clapet anti-retour (27) agencé dans une partie du second circuit de tuyauterie (37d) qui aboutit à l'espace toroïdal (7), lequel second clapet anti-retour (27) a une précharge le repoussant en direction d'une direction fermée plus élevée que le premier clapet anti-retour (24).

7. Frein hydrodynamique selon la revendication 6, **caractérisé en ce que** le second clapet anti-retour (27) a une précharge qui est plus petite que la pression qui règne dans le premier circuit de tuyauterie (35) et indique que le frein est activé.

8. Frein hydrodynamique selon la revendication 7, **caractérisé en ce que** le second clapet anti-retour (27) a une précharge telle qu'il s'ouvre lorsqu'il existe une pression positive de 1 à 3 × 10⁵ Pa (de 1 à 3 bars) dans le second circuit de tuyauterie (37).

9. Frein hydrodynamique selon l'une quelconque des revendications précédentes, **caractérisé en ce que** le second circuit de tuyauterie (37) comporte une pompe (26) qui effectue le transfert du milieu à une pression positive à partir de l'espace de stockage (34).

10. Frein hydrodynamique selon la revendication 9, **caractérisé en ce que** ladite pompe est une pompe à engrenages (26).
